(19) Europäisches Patentamt
European Patent Office
Office européen des brevets

(11) **EP 2 223 096 B1**

(12) **EUROPEAN PATENT SPECIFICATION**

(45) Date of publication and mention of the grant of the patent:
**03.06.2015 Bulletin 2015/23**

(51) Int Cl.:
*G01N 29/024* (2006.01)　　*G01N 29/032* (2006.01)
*G01N 29/036* (2006.01)　　*G01N 30/02* (2006.01)

(21) Application number: **08864975.1**

(22) Date of filing: **15.12.2008**

(86) International application number:
**PCT/SE2008/000703**

(87) International publication number:
**WO 2009/082320 (02.07.2009 Gazette 2009/27)**

(54) **DEVICES, METHODS AND SYSTEMS FOR MEASURING ONE OR MORE CHARACTERISTICS OF A SUSPENSION**

VORRICHTUNGEN, VERFAHREN UND SYSTEME ZUM MESSEN EINER ODER MEHRERER EIGENSCHAFTEN EINER AUFHÄNGUNG

DISPOSITIFS, PROCÉDÉS ET SYSTÈMES POUR MESURER UNE OU PLUSIEURS CARACTÉRISTIQUES D'UNE SUSPENSION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.12.2007 US 961070**

(43) Date of publication of application:
**01.09.2010 Bulletin 2010/35**

(73) Proprietor: **General Electric Company**
**Schenectady, NY 12345 (US)**

(72) Inventors:
• **GANESAN, Baskaran**
**Bangalore 560037 (IN)**
• **NATH, Shridhar**
**Niskayuna**
**New York 12309 (US)**
• **NORDBERG, Roger**
**S-751 84 Uppsala (SE)**
• **RADEBACH, Matthew**
**Glenville**
**New York 12302 (US)**
• **SUN, Zongqi**
**Albany**
**New York 12203 (US)**
• **TOGO, Mottito**
**Bangalore 560037 (IN)**
• **WILLIAMS, Alan, M.**
**Easton**
**Pennsylvania 18042 (US)**

(74) Representative: **Stavbom, Ellen Elisabet**
**GE Healthcare Bio-Sciences AB**
**Björkgatan 30**
**751 84 Uppsala (SE)**

(56) References cited:
WO-A1-03/046546　　WO-A1-2004/046669
WO-A1-2006/069797　　DE-A1- 19 940 192
US-A- 5 533 402　　US-A- 5 533 402
US-A1- 2005 150 275　　US-A1- 2007 280 712
US-B1- 6 330 831　　US-B1- 6 959 589

• CHALLIS R E ET AL: "Ultrasound techniques for characterizing colloidal dispersions; Ultrasound techniques for characterizing colloidal dispersions", REPORTS ON PROGRESS IN PHYSICS, INSTITUTE OF PHYSICS PUBLISHING, BRISTOL, GB, vol. 68, no. 7, 1 July 2005 (2005-07-01), pages 1541-1637, XP020084659, ISSN: 0034-4885, DOI: DOI: 10.1088/0034-4885/68/7/R01
• R E CHALLIS ET AL ULTRASOUND TECHNIQUES FOR CHARACTERIZING COLLOIDAL DISPERSIONS vol. 68, 2005, pages 1541 - 1637, XP020084659
• DATABASE WPI Week 198551, Derwent Publications Ltd., London, GB; AN 1985-319841, XP003025145 THOMSON & JP 60 222763 A (SUMITOMO BAKELITE CO) 07 November 1985

- **DATABASE WPI Week 198150, Derwent Publications Ltd., London, GB; AN 1981-M8096D, XP003025146 THOMSON & SU 808 866 A1 (RYAZAN WIRELESS ENG INST) 28 February 1981**
- **MARTIN HOFMANN: 'Use of ultrasound to monitor the packing of large-scale columns,the monitoring of media compression and the passage of molecules,such as monoclonal antibodies,through the column bed during chromatography' JOURNAL OF CHROMATOGRAPHY A vol. 989, 07 March 2003, pages 79 - 94, XP004410551**

**Description**

BACKGROUND

The invention relates generally to devices, methods and systems for measuring one or more characteristics of a suspension.

Slurry concentration is one of many important parameters in chromatography column packing process. The current concentration measurement by resin settling and manual reading is time consuming, lacks accuracy (approximately +/-5%), is error-prone and also wastes large amounts of valuable resin materials.

In the column packing process, resin beads such as agarose beads are mixed with solvent liquid buffer to create a slurry suspension. Stirring and agitation help to ensure that the beads are fully mixed with the buffer and homogenously distributed in the slurry. Then the slurry is pumped into the column. When the entire column is filled with slurry, the beads gradually settle on the bottom and accumulate upwards to form a solid bed. The bed height, when the beads are completely settled, is recorded to calculate Volume Gravity Settled (Vgs) based on a known column diameter. Then the column is compressed using a movable plate to push the buffer out of the column through filters, while leaving beads packed in the column. After the beads are compressed, the bed height is recorded again to calculate Column Volume (Vc). The ratio of Vgs and Vc is defined as the compression factor, which is generally viewed as the most important parameter in the column packing process. The compression factor is indicative of column qualities, such as, resolution, capacity and throughput.

In current column packing methods, media is packed to a certain bed height (Vc), which is determined in advance. Slurry volume is measured using a flow meter. The compression factor (CF) is determined by the slurry volume concentration (solid beads volume concentration in slurry). If the slurry concentration (%) is faulty when packing these columns, the compression factor of the media will not be optimal.

Slurry volume % measurement is currently determined using a sedimentation method, which is manual, slow and prone to errors. Generally, the user mixes the slurry to a homogenous state and takes a sample. This sample must be settled overnight or longer in a graduated cylinder. The Vgs level is read after the slurry has settled, and slurry concentration is calculated as:

$$\text{Slurry \% = Vgs in the sample / total slurry volume.}$$

At best, current methods provide slurry % measurements with approximately +/- 2% error, however, the error rate is generally higher. Slurry % measurements can also be carried out in mass % and then converted to volume %. Although mass measurements can be accurate, bead volume changes significantly in different buffers. This leads to large errors when converting mass % to volume %. For the purpose of description only and is not intended to be limiting, the term slurry concentration, as used herein in the description of the embodiments, is based on volume %.

The limitations of current methods demonstrate that there is a need for a slurry concentration sensor. The ideal sensor should be fast, robust and reliable for determining slurry concentration to avoid re-packing columns in production processes. An in-line (real time) slurry concentration sensor would also enable automatic column packing, which would greatly simplify industrial workflow, reduce human errors and improve large-scale production repeatability and cost effectiveness.

US 2007/280712 discloses an ultrasound apparatus with a transmitter configured to direct an ultrasound signal toward a first reflector and a second reflector. It does however not disclose any compensation of measurements due to differences in temperatures.

US 5,533,402 discloses an ultrasound device in which two resonator enclosures are provided within one device. It does however not suggest that the resonator enclosures would be able to perform measurements independently.

Many ultrasonic measurement instruments have been developed over the past two decades for slurry concentration measurements for different industrial applications. Some of them require off-line measurements, taking slurry samples out of the original container and measuring in a specially designed container. Some other systems use in-line measurements but do not provide sufficient accuracy.

Besides ultrasonic methods, optical methods have also been explored for slurry concentration measurement. However, most of these optical systems are only capable of measuring slurries with low concentration (usually <10%) and that are relatively transparent. For high concentration and opaque slurry samples, optical methods are insufficient.

BRIEF DESCRIPTION

The ultrasonic systems of the invention are more accurate, faster and more efficient than previous methods and may be readily adapted for automation and portability and for use in a variety of industrial and biomedical processes. For example, these systems improve column-packing quality and reduce the amount of resin materials needed.

The system comprises two or more immersible devices with a two-step reflector system that, in some of the embodiments, is adapted to calibrate either or both velocity and attenuation based on buffer alone and/or on homogeneous slurry measurements. The systems use dual devices and data analysis processors that are adapted to incorporate a dual device system and they use temperature recording and compensation to reduce temperature variation in suspension measurements. These systems may be adapted for in-line or off-line use and may be used to measure a variety of suspension parameters including, but not limited to, concentration, particle density and a rate of settlement. These systems may be adapted for in-line or off-line use, and may be adapted for a flow-through system and/or a system in which the ultrasound device is built in to the suspension processing system.

DRAWINGS

These and other features, aspects, and advantages of the present invention will become better understood when the following detailed description is read with reference to the accompanying drawings in which like characters represent like parts throughout the drawings, wherein:

FIG. 1 is a schematic view of an embodiment of the immersible device of the invention.

FIG. 2 is a schematic view of an embodiment of the system of the invention.

FIGs. 3a and 3b are schematic views of an embodiment of an immersible device with at least two reflective surfaces.

FIG. 4 is a graph of an embodiment of a waveform generated from using a two-surface reflector design.

FIG. 5 is a graph illustrating example levels of variability when a stirring bar is used.

FIG. 6 is a graph show a suspension velocity vs. suspension % for one set of QFF samples.

FIGs. 7a and 7b are graphs showing examples of the potential difference in velocity between liquid carriers.

FIG. 8 is a graph showing a corrected velocity vs. suspension % for four different bead materials.

FIG. 9 is a graph showing the effect of temperature variations on velocity measurements.

FIG. 10 shows a 3D regression plot of velocity vs. concentration and temperature.

FIG. 11 is a schematic diagram of an embodiment of a portable device of the invention.

FIG. 12 is a perspective view of an embodiment of a portable device of the invention.

FIG. 13 is a schematic diagram of an embodiment of a flow-through ultrasound measurement system of the invention.

FIG. 14 is a schematic diagram of an embodiment of a built-in ultrasound measurement system of the invention.

DETAILED DESCRIPTION

One example embodiment of the system comprises two ultrasonic probes, two reflector blocks, a housing to fix the probe and reflector in relative positions, and a portable data analysis instrument. One of the probe/reflector pairs (otherwise referred to herein as an immersible device) is immersed in the slurry directly, and the other probe/reflector pair comprises a filter, which only allows only the liquid carrier, such as a buffer, to flow between the probe surface and the reflective surface and blocks resin beads from entering when immersed in the slurry. By measuring ultrasonic velocities, attenuations, and reflection/transmission coefficients in slurry, the concentration of the particles in the slurry may be determined with an accuracy that is +/-1%. Buffer liquid variations may be removed from the data analysis algorithms when using a dual immersible device system. The immersible device may also comprise two or more staggered reflective surfaces, which reduce distance variation between the probe and the reflector, to improve the accuracy of the ultrasound measurements.

Data analysis algorithms used in the systems and methods may be adapted to calculate calibrated ultrasound parameters based on buffer only and homogeneous slurry measurements. This process for calibrating the parameters greatly reduces the influence that buffer variations have on measurement accuracy. The dual probe design helps to acquire both the buffer only and slurry ultrasound parameters in one measurement without requiring time consuming settling steps. The data analysis steps may also incorporate data interpolation and correlation to accurately calculate TOF.

Although ultrasound parameters related to slurry concentration generally comprise velocity, attenuation, reflection coefficient and resonant frequency, the latter is not conducive to an in-line measuring system. Velocity is quite sensitive to slurry concentration change (<1%). Velocity may be divided into phase velocity and group velocity. Phase velocity is the speed of phase change along the wave-propagating path while group velocity is the wave profile moving speed, also called energy speed. If a propagation media is non-dispersive, then phase velocity and group velocity are the same. If the media is dispersive, then phase velocity and group velocity are different at different frequencies. Media dispersion is related to slurry bead size distribution. Most slurry concentration measurements are taken at a single frequency (for example, 1Mhz) and then the group velocities are measured. For descriptive purposes only and without any intended limitation on the scope of the invention, velocity, when used to describe the example embodiments, refers to group velocity.

With known wave propagation distance, velocities may be calculated based on time difference measurements. There are three widely used time measurement methods: zero crossing, peak amplitude, and cross correlation. Zero crossing locates the time when the wave first crosses zero, either from positive to negative or vice versa. Zero crossing may be efficiently implemented by waveform interpolation and root finding algorithms. Two zero crossing points will provide the time difference from which velocity may be calculated. Peak amplitude methods measure at least two peaks relative to time and calculate the time difference, from which velocity may be measured. Cross correlation methods shift one of at least two waveforms and then compare the similarities between the two waveforms. When the correlation reaches maximum, this is the time difference between the two waveforms. Zero crossing is used in one or more of the embodiments in part because of its high accuracy and robustness in the presence of waveform distortions.

Acoustic field radiated from an ultrasound probe may be divided into near field and far field. In the near field, wave amplitude changes dramatically while phase is relatively accurate (< 0.005% error). In the far field, amplitude changes gradually with monotonic decay and phase error increases because of wave diffraction. The optimal location for time or velocity measurements is in the near field and the optimal location for attenuation measurements is in the far field.

Attenuation may be measured based on the rate of waveform decay, which is usually measured in dB/m or Neper/m (1Np/m = 8.686dB/m). Different concentrated slurries have different wave attenuations. The measured attenuation represents the overall attenuation, which includes the attenuation associated with the probe (and a buffer rod if it is attached to the probe), the probe and slurry interface, the slurry, the far field diffraction and the plate reflection, if a reflector is used. To optimize the methods and systems that comprise ultrasound attenuation measurements, multiple reflections are preferably recorded rather than just one reflection. To do so, distance between the probe surface and reflector should be tightly controlled.

Reflection coefficient is the ratio of amplitudes of the incoming wave and the reflected wave at the interface between two materials with different acoustic impedances. Acoustic impedance is defined as the multiplication of density and ultrasound velocity in the material where wave propagates through. When slurry concentration changes, both slurry density and ultrasound velocity changes accordingly.

Resonant frequency methods measure vibration frequency change due to liquid mass change with a known volume in a vibrating tube. Then density may be converted into a concentration at a known temperature. Because it is an offline measurement technique, it is generally not suitable for in-line slurry concentration measurement. Velocity is used in one or more of the embodiments because of its high sensitivity and accuracy.

Velocity measurements may use pulsed waves or continuous waves. Pulsed wave based method may use a pulse-echo method wherein a single ultrasonic transducer acts as a transmitter as well as a receiver; and/or a through-transmission method wherein two ultrasonic transducers are used in which one is the transmitter and the other is the receiver. Continuous wave based methods may use interference or generation of stationary waves due to multiple reflections from a sample, where the sample is place between two transducers or is placed between transducer and a reflector. The pulse-echo method is combined with zero crossing in one or more of the embodiments to achieve the high velocity accuracy.

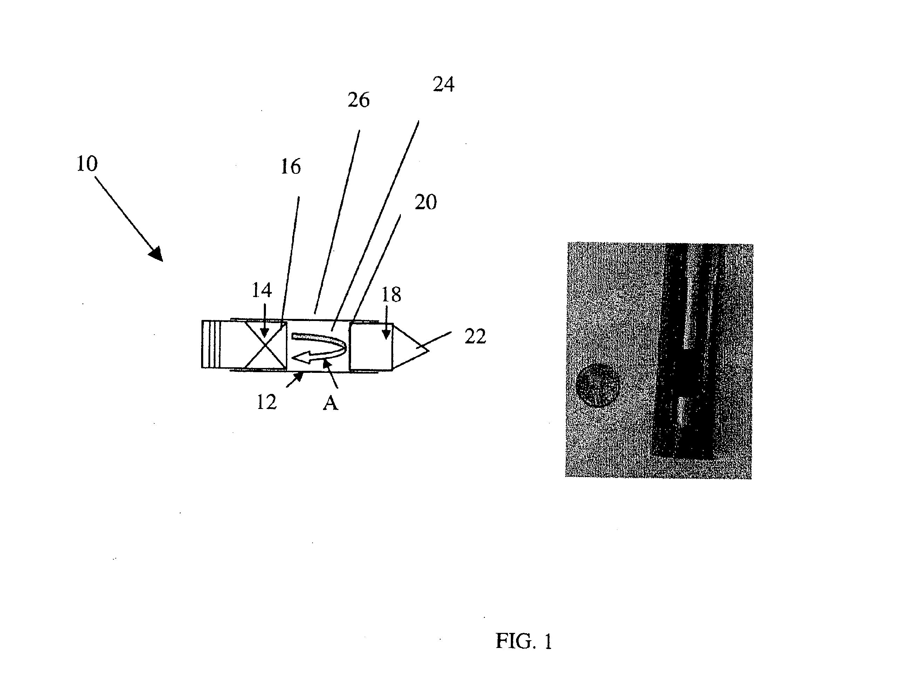

One embodiment of the immersible device of the invention is generally shown and described in FIG. 1 as device 10. Device 10 generally comprises housing 12 with space 24, probe 14 with a probe surface 16, and reflector 18 with a reflective surface 20 and cone 22. Housing 12 may comprise one or more openings 26 into or through the housing to allow the suspension, such as a chromatography column slurry, to flow into space 24 between probe surface 16 and reflective surface 20, to enable ultrasound waves being emitted through probe 14 to pass through the suspension in space 24 and reflect off of reflective surface 20 and back to probe surface 16. This wave path is generally shown in FIG. 1 as wave propagation path A. The design and configuration of the immersible device may be modified, as needed by one skilled in the art, to suit a particular use, while still providing the necessary elements of the immersible device.

Reflector 18 has a polished flat surface on one end and a cone 22 on the other end. The flat surface is used to reflect ultrasound waves and the cone shape helps to reduce reflections from the other end. Both the probe and reflector are fixed in position by housing 12. The device may be immersed directly into a suspension. Ultrasound waves are radiated from the probe surface, propagate through the suspension, and are reflected back to the probe by the reflector surface.

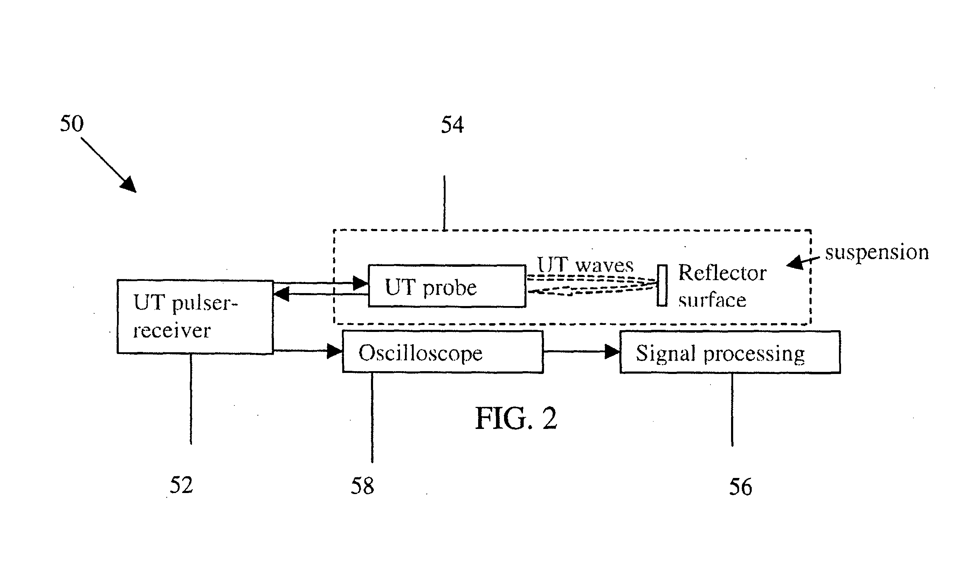

An embodiment of the system of the invention is generally shown and referred to in FIG. 2 as system 50. System 50 generally comprises an ultrasound wave generator/receiver device 52 (e.g. Panametric Pulser/Receiver 5072PR), in communication with the immersible device 54 to transmit and receive the ultrasound waves to and from the immersible device; and a signal processing device 56, in communication with the ultrasound wave generator to receive and process the ultrasound waves from the ultrasound wave generator/receiver device. System 50 may also comprise oscilloscope 58 to display the waveform signals.

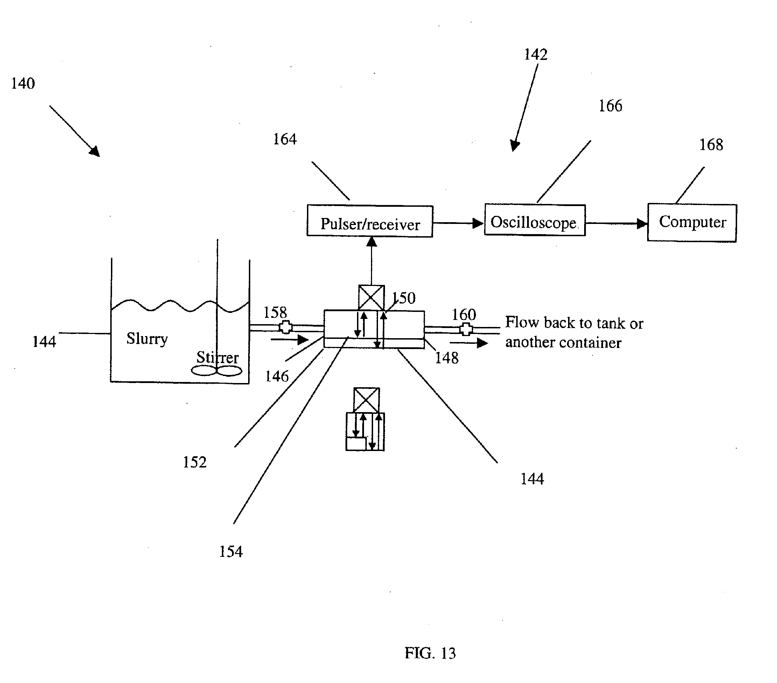

Another embodiment of the system of the invention is generally shown and referred to in FIG. 13 as system 140. System 140 generally comprises a flow-through device 142 for measuring one or more ultrasound parameters of a suspension comprising particles dispersed in a liquid carrier, generally comprising, a container 144 having an inlet 146 and an outlet 148, through which the suspension can flow; one or more ultrasonic probes 150, adapted to transmit and receive ultrasonic waves through the suspension as it flows through the container; one or more reflectors having at least two reflective surfaces 152 and 154 positioned at staggered distances from the probe surface to reflect the ultrasonic waves through the suspension onto the probe surface; and one or more fixtures or housing (e.g. container 144), that fix the probe and the reflector at positions with a space in between the probe surface and the reflective surface to allow the suspension to flow into the space between the probe surface and the reflective surfaces. System 140 also may comprise switches 158 and 160. System 140 allows the slurry from a slurry container, such as a column, to flow into the measuring system. System 140 further comprises a an ultrasound wave generator/receiver device 162 to transmit and receive the ultrasound waves to and from probe 150; and a signal processing device 164, in communication with the ultrasound wave generator to receive and process the ultrasound waves from the ultrasound wave generator/receiver device, oscilloscope 166 and processor 168 for processing and analyzing the ultrasound signals.

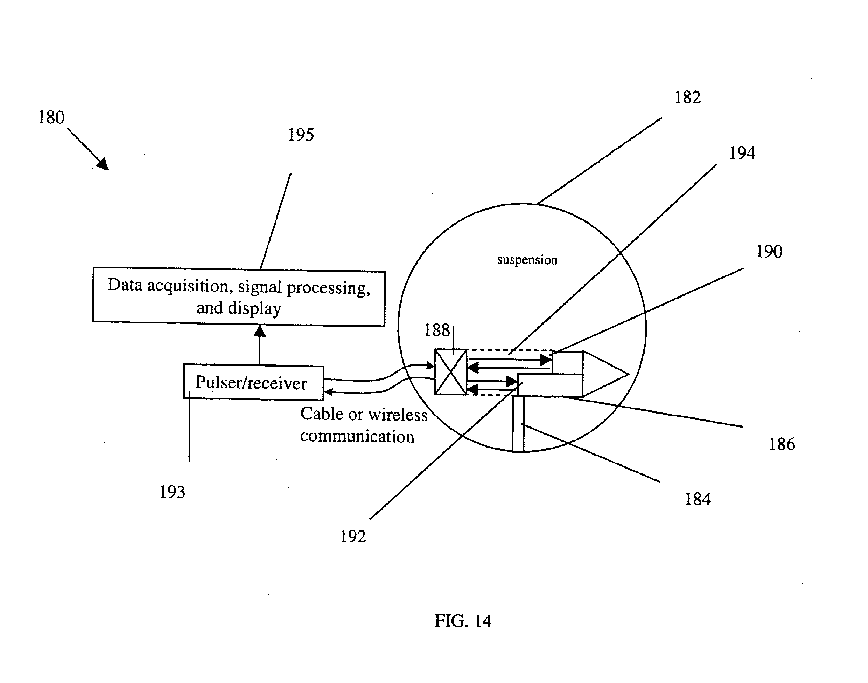

Another embodiment of the system of the invention is generally shown and referred to in FIG. 14 as system 180. System 180 comprises an ultrasound suspension measurement system that is built into a processing unit 182. System 180 generally comprises, an arm 184 to hold and support one or more ultrasonic device 186 within processing unit 182 so that the suspension in unit 182 can flow through device 186. Device 186 is not drawn to scale in FIG. 14, but rather is enlarged to illustrate the components of device 186. Device 186 comprises probe 188, to transmit and receive ultrasonic waves through the suspension in the tank (unit 182); one or more reflectors having at least two reflective surfaces 190 and 192 positioned at staggered distances from the probe surface to reflect the ultrasonic waves through the suspension onto the probe surface; and housing 194, to support and fix the probe and the reflector at positions with a space in between the probe surface and the reflective surface to allow the suspension to flow into the space between the probe surface and the reflective surfaces.

System 180 may further comprise an ultrasound wave generator/receiver device 193 to transmit and receive the ultrasound waves to and from probe 180; and a signal processing device 195, in communication with the ultrasound wave generator to receive and process the ultrasound waves from the ultrasound wave generator/receiver device, an oscilloscope and a processor for processing and analyzing the ultrasound signals. Device 186 may communicate with device 192 through a cable or wirelessly.

To achieve highly accurate measurements using a single-surface reflector such as the embodiments shown in FIG. 1 and FIG. 2, the distance between the probe and the reflector should either be tightly controlled structurally or be factored into the signal analysis as a contemporaneous measurement or as variable. For example, if the distance between the reflector and probe surface changed because of vibrations or slips, a distance measurement should be taken and factored in to the analysis.

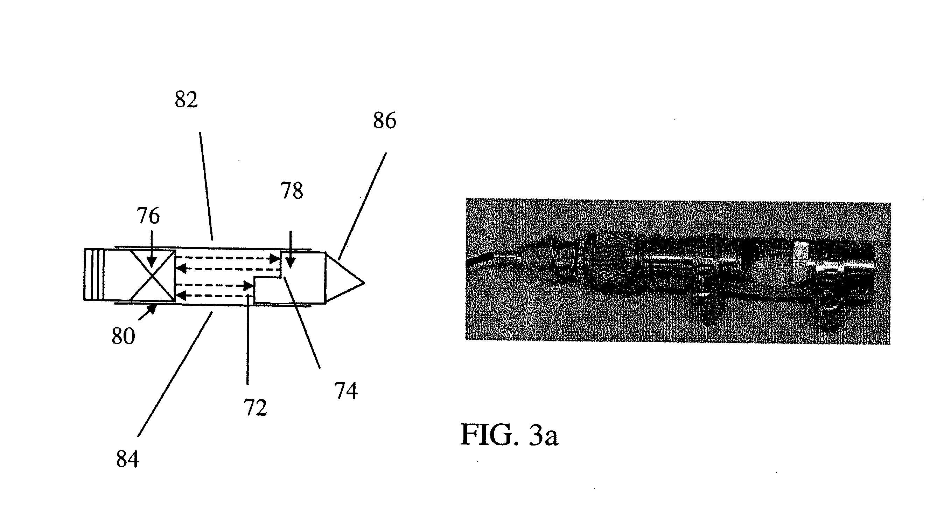

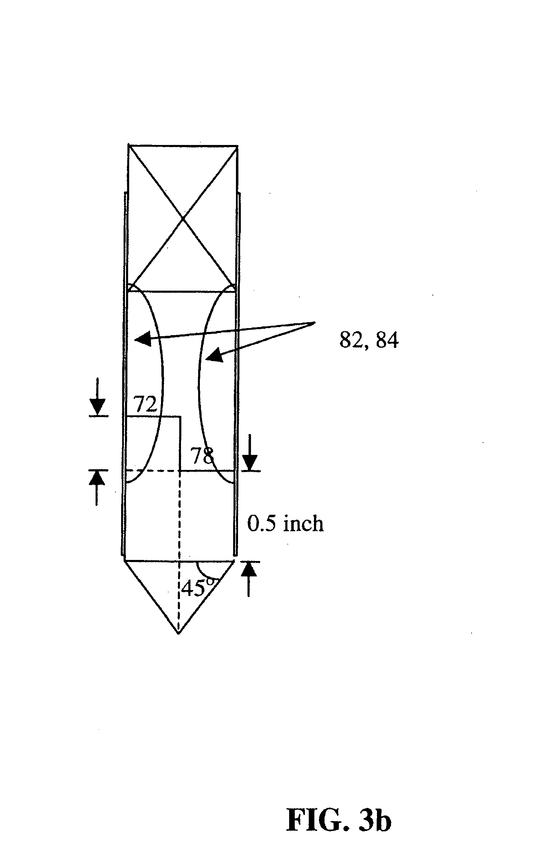

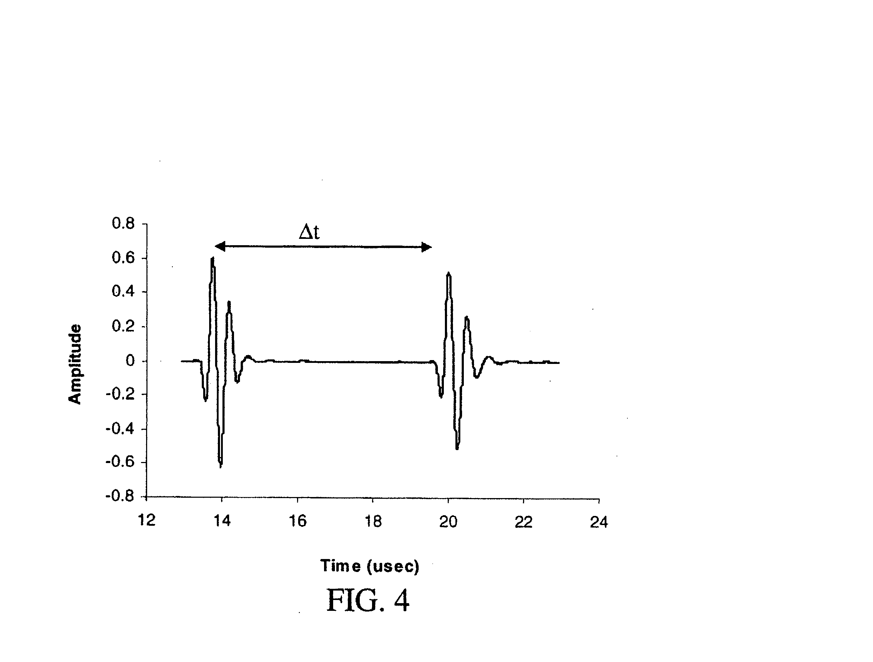

To reduce possible distance measurement errors, a two-surface reflector may be incorporated into the immersible device. An embodiment of such a device with at least two reflective surfaces is generally shown and described in FIGs. 3a and 3b as device 70. The dash lines B and C shown in FIG. 3 illustrate two possible ultrasound paths. This example embodiment obviates the need to compare two round trip echoes. Instead, two echoes from the separate reflecting surfaces 72 and 74 may be compared. The distance between the reflective surfaces of this embodiment is 5.08 +/- 0.0025 mm (0.2 +/- 0.001 inch) and the reflective surfaces should be parallel to each other. Even the distance between probe 76 and reflector 78 can change without negatively impacting the accuracy because the distance between the two echoes is fixed. This configuration is generally more robust against distance errors. The housing 80 may be used to further minimize the possible angle misalignment between probe 76 and reflector 78. This embodiment of the housing has an outside diameter of between about 15.799 to 15.850 mm (0.622 to 0.624 inch) and an inside diameter of about 15.85 mm (0.624 inch) plus the slide fit. The housing may be made from any material that is suitable for a particular application. This example embodiment of the housing is stainless steel. The openings 82 and 84 in this embodiment are about 25.4 mm (1.0 inch) in length. Reflector cone 86 in this embodiment has in internal angle of 45 degrees. In this embodiment, the distance between reflective surface 72 and the base of cone 86 is about 12.7 mm (0.5 inch). FIG. 4 shows the typical waveform collected in slurries with the two-surface reflector design. Zero crossing processes two distinct echoes from separate reflector surfaces to obtain the time difference and then velocity.

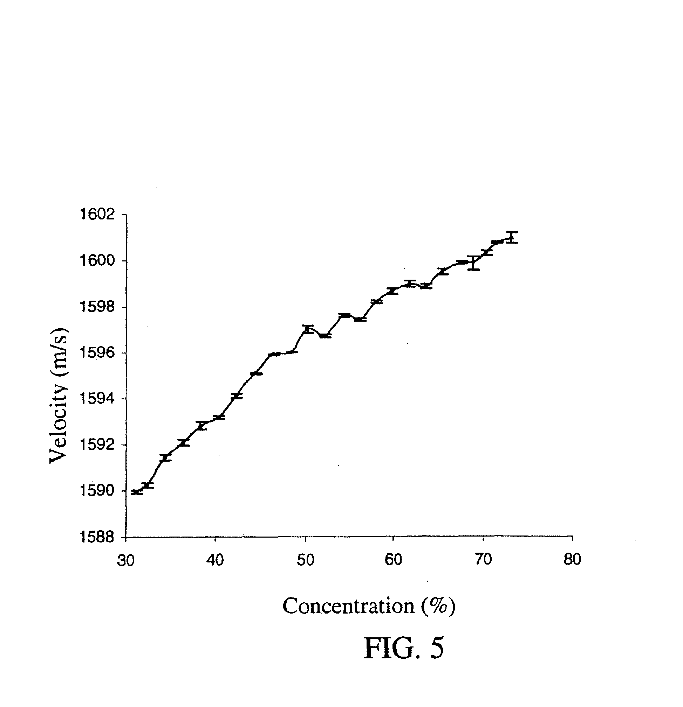

Depending on whether the device, methods and systems of the invention are use in an off-line application or are incorporated into an in-line application at a point in the system in which the suspension may need to be maintained in a more homogenized state, stirring bars may be incorporated into the system to maintain appropriate distribution of the particles in suspension to obtain accurate measurements. An example of such stirring bars is mechanical stirring bar such as Caframo Model RZR1 mechanical stirrer, which has a variable speed control and a stirring head that can be clamped in a fixed vertical position. FIG. 5 is a graph illustrating the low levels of variability when constant stirring bar is used for certain suitable applications.

Without stirring, particles in the slurry start to settle downward. Ultrasound parameters can be measured at multiple times during the particle settlement process. For example, the ultrasound velocity and/or attenuation may be measured every 30 seconds multiple times (e.g. 20 times) as the particles settle. The ultrasound parameter change versus time during particle settlement process (rate of settlement) may be used to determine other valuable information, such as, but not limited to, particle size, particle contamination status, particle aging status, and particle density.

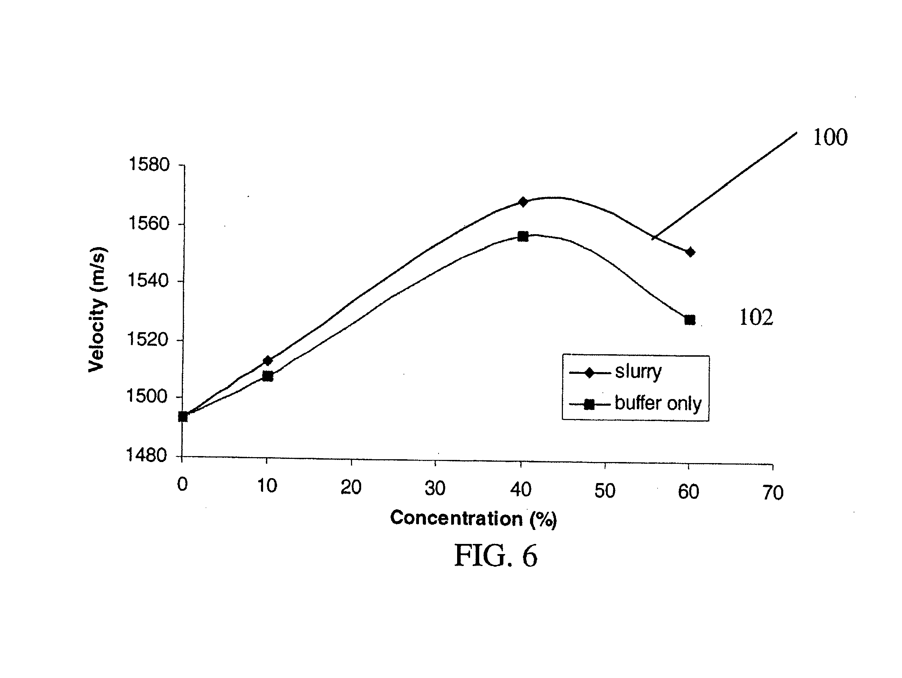

The liquid carrier, such as a buffer, also may introduce variations into a system, as illustrated by the graph in FIG. 6. FIG. 6 shows line 100 as slurry velocity vs. slurry % for one set of QFF samples, which are all labeled with 10% ethanol buffers, and line 102 as buffer velocity vs. slurry % for the same set of QFF samples. Line 102 clearly shows buffer variations even though all the buffers are labeled as 10% ethanol. The similarity between lines 100 and 102 demonstrates that buffer variation may have a significant effect on slurry velocity measurements. To adjust for such variation, the slurry velocity is corrected based on the buffer velocity. The resin material, in this example, is modified by the buffer liquid property. To correct for these modification, the slurry velocity is the buffer velocity modified by the resin, depending on the resin %, wherein V (resin %) is the corrected velocity, as follows:

$$V \text{ (resin \%)} = V\_slurry - V\_buffer.$$

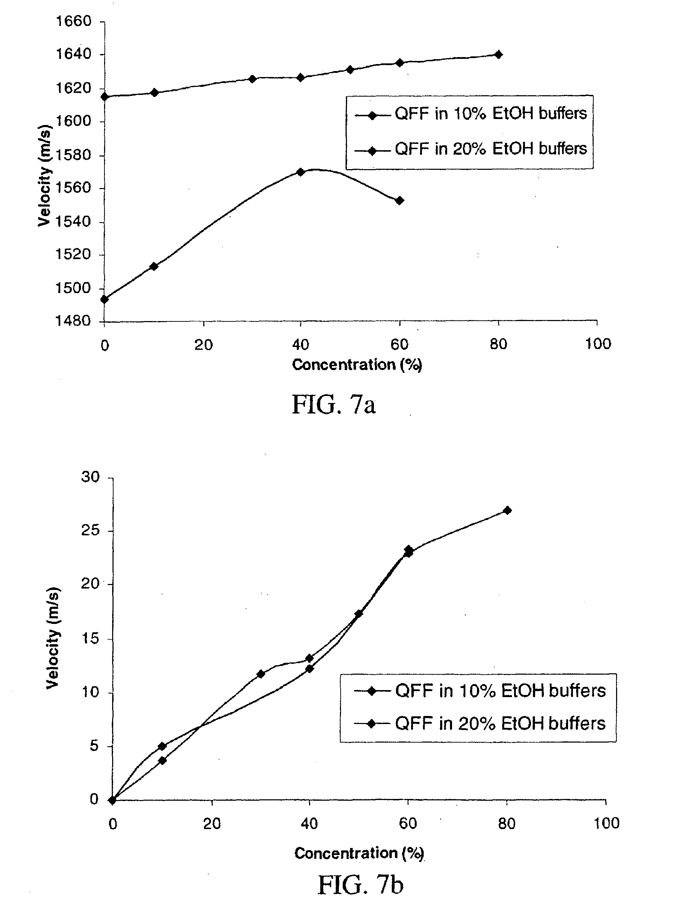

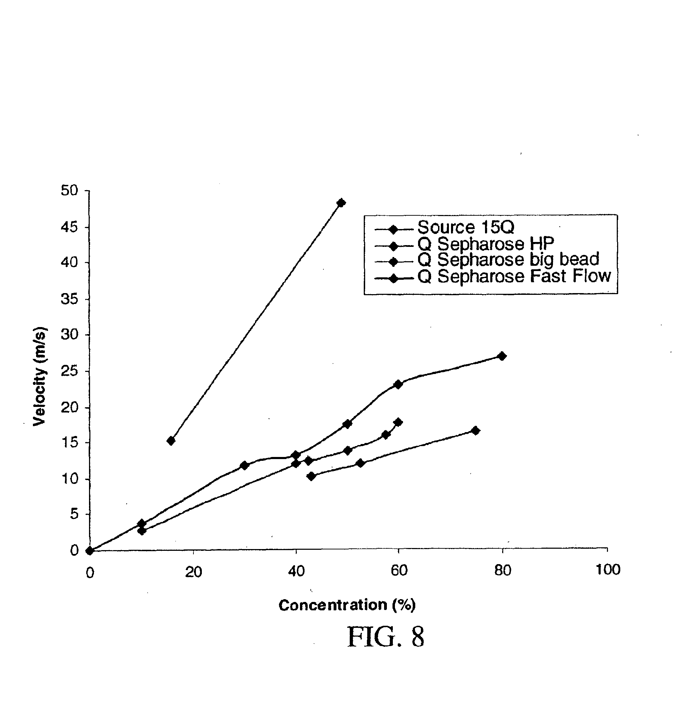

FIG. 7a shows the velocity of QFF vs. slurry concentration for two sets of samples. More specifically, FIG. 7a shows a large slurry velocity difference between two sets of QFF samples: QFF in 10% ethanol and QFF in 20% ethanol. Fig. 7b shows the corrected velocity vs. % for the two sets of QFF samples. Comparison between FIG. 7a and FIG. 7b shows that velocity variation is greatly reduced from ~100m/s to < 3m/s by velocity correction. FIG. 8 shows the corrected velocity vs. slurry % for four different bead materials. All the velocities have been corrected based on two independent measurements: one for slurry velocity and one for buffer only. FIG. 8 also indicates that: for slurry concentration measurements, each bead material has its own velocity vs. % curve; unique curve distribution may be used for bead identification and quality monitoring (aging, size change, etc.); and monitoring bead settlement process can be used to obtain additional information about the particles in the suspension such, but not limited to, bead density, size and aging.

Buffer variation may be reduce using an off-line calibration method, such as the following:

- Shake 5L slurry bottle to homogenous state;
- Transfer ~0.5L to a new container A (for example, 2L Nalgene bottle);
- Fill with 10% EtOH up to 2L mark;
- Let it settle overnight;
- Remove supernatant (~ 1.5L) without disturbing the bead bed and store the supernatant buffer solution in another container B;
- Transfer slurry from container A to a measuring cylinder (1L);
- Wait overnight;
- Measure heights of solid bead (x), liquid (y). So slurry concentration is x/y = z%;
- Transfer slurry from the measuring cylinder back to container A. Rinse with small amount of buffer solution in container B, if needed calculate new slurry concentration;
- Stir and take first velocity measurement in container A;
- Add buffer solution in container B to A to make a lower % sample;
- Take a velocity measurement;
- Repeat Steps 11 and 12 until running out of buffer solution in container B.

Although this sample preparation method will ensure that the same buffer % for all the slurry samples is used, in-line applications typically require an in-line calibration method. Therefore, to reduce buffer variation in an in-line system, one or more of the embodiments of the methods and systems may incorporate dual or multiple immersible devices. Two ultrasound devices or probes are used in combination: one to measure slurry velocity and the other to measure buffer only velocity with a filter around the probe to block bead entrance and only allow buffer solution to go through the filter. Dependent on the filter pore size, time varies for buffer to enter and fully occupy the ultrasound path. As a non-limiting example, several seconds may be sufficient time for a Q Sepharose big bead slurry sample using a 12μm filter. Any air bubbles in the ultrasound path are preferably removed by a variety of methods, such as, but not limited to, slight agitation of the device or liquid in the flow space.

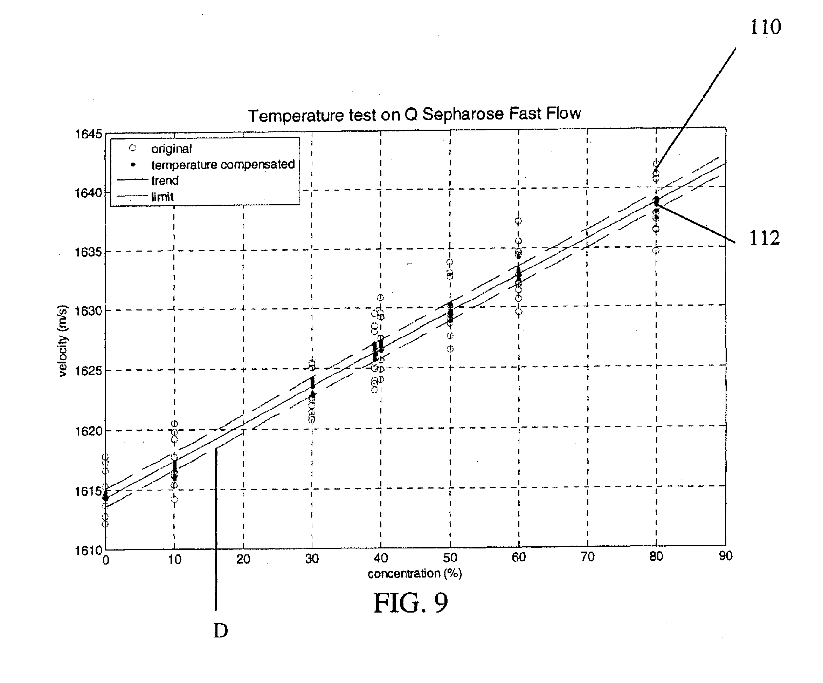

Temperature also may play a significant part in determining one or more of the ultrasound parameters of the suspension. For example, temperature variations may significantly affect velocity measurements as shown in FIG. 9. FIG. 9 displays QFF velocities at different slurry temperatures within the range [9°C, 30°C] at each slurry concentration. Circles 110 are the measured velocities and dots 112 are the compensated velocities after temperature regression. Dash lines D are velocity bounds for +/-2% concentration change.

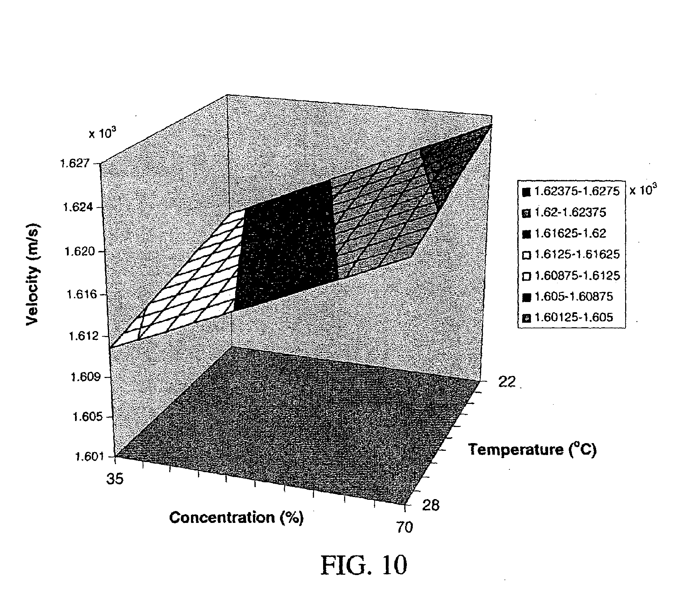

A 3D regression plot of velocity vs. concentration and temperature is shown in FIG. 10. Temperature and concentration influences are independent in this case. The trend in the 3D regression plot is summarized in a regression equation as below.

$$\text{Velocity (m/s)} = 1624.753672 + 0.307557 * \text{concentration} - 0.581831 * \text{temperature}$$

The regression equations are different for different slurries depending on bead and buffer combinations. To accurately compensate for the temperature variation, temperature in slurry should to be measured precisely, preferably within +/-0.05°C accuracy. Although it may be desired to control the temperature of the chamber to keep slurry temperature constant during ultrasound measurements, this configuration may not be suited to an industrial manufacturing environment. For applications, where it is not suitable or desired to control the temperature of the suspension, temperature recording and compensation may be used to reduce temperature variation in suspension measurements. From these temperature measurements, a temperature compensation curve is generated that can be applied to the velocity measurements. Temperature compensation curves may be generated using measurements from multiple temperature points.

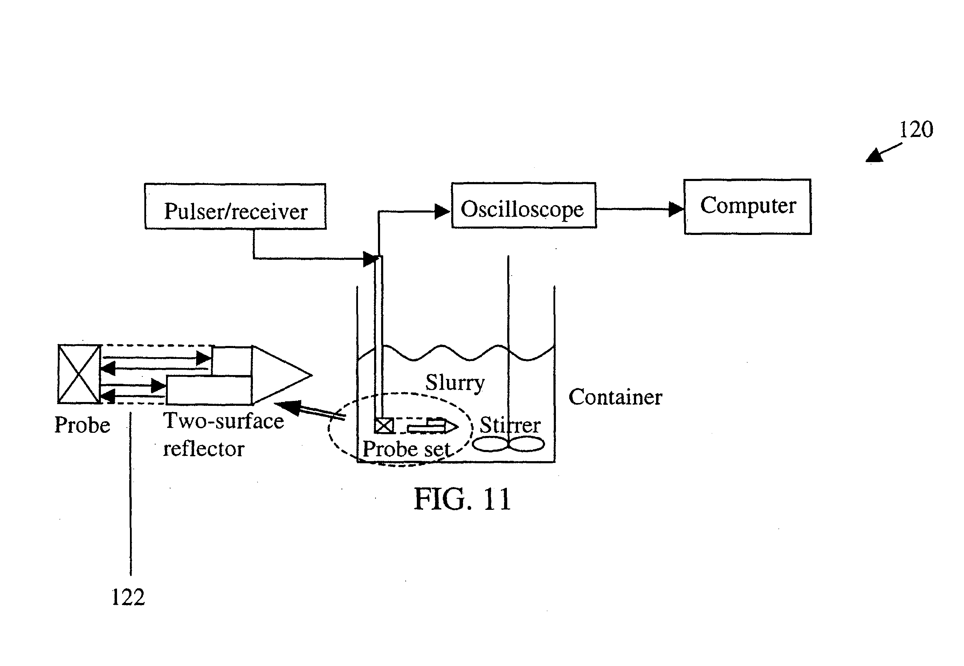

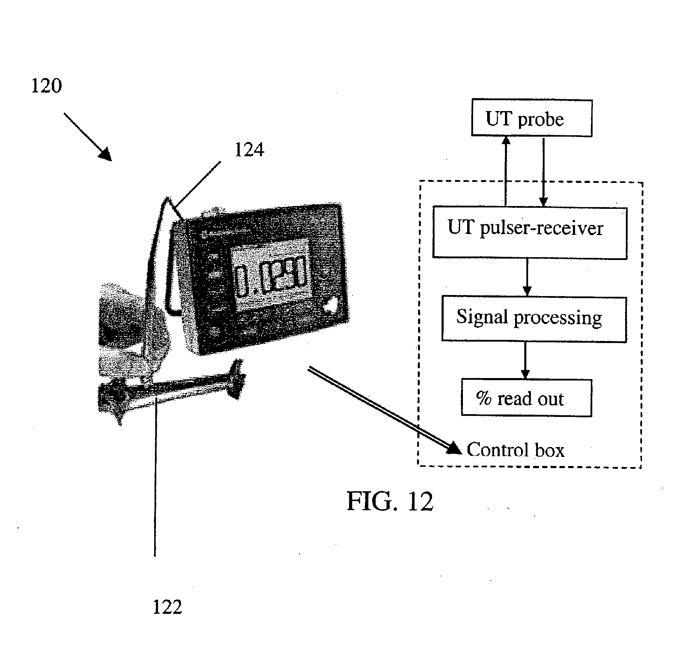

The immersible devices and the methods and systems may be adapted for use in portable devices such as, for example, field devices. For example, FIG. 11 is a schematic diagram of a situation in which a portable device may be used. This embodiment houses the pulser/receiver, the oscilloscope and the processor/computer in one unit 120, as shown in FIG. 12. The immersible device 122 communicates with unit 120 via cable 124. Unit 120 may also comprise communication ports to allow uploads and downloads of information, such as, but not limited to, software and data, from and to, digital devices such as, but not limited to, laptops, personal computers, and handheld devices, for further transmission, data processing, and plotting. Unit 120 may communicate with such devices by a hardline or wirelessly.

While only certain features of the invention have been illustrated and described herein, many modifications and changes will occur to those skilled in the art. It is, therefore, to be understood that the appended claims are intended to cover all such modifications and changes as fall within the scope of the invention.

**Claims**

1.  A system for measuring one or more ultrasound parameters of a suspension comprising particles dispersed in a liquid carrier comprising,

    two or more immersible devices (10, 54) for measuring one or more ultrasound parameters of a suspension comprising particles dispersed in a liquid carrier, comprising, one or more ultrasonic probes (14, 76), adapted to transmit and receive ultrasonic waves, and having a surface, one or more reflectors(18, 78) having at least two reflective surfaces (20, 72, 74) positioned at staggered distances from the probe surface to reflect the ultrasonic waves onto the probe surface and a housing (12, 80), that fixes the probe and the reflector at positions with a space in between the probe surface and the reflective surface, comprising an opening (26, 82, 84) into the housing (12, 80) that is of a size sufficient to allow the suspension to flow into the space between the probe surface and the reflective surface

    an ultrasound wave generator/receiver device (52), in communication with the immersible devices (10, 54) to transmit and receive the ultrasound waves to and from the immersible devices (10, 54); and

    a signal processing device (56), in communication with the ultrasound wave generator (52) to receive and process the ultrasound waves from the ultrasound wave generator/receiver device, **characterized in that**

    at least one of the immersible devices (10, 54) is adapted to calibrate the liquid carrier by further comprising a filter adapted to prevent the particles from flowing into the space while allowing the liquid carrier to flow into the space of the calibrating immersible device (10, 54), wherein temperature recording and compensation is used to reduce temperature variation in suspension measurements.

2. The system of claim 1, further comprising a suspension processing unit, for processing the suspension, comprising one or more fixtures for supporting one or more of the devices inside the processing unit so that the suspension can flow into the space between the probe surface and the reflective surface.

3. A system according to claim 1 or 2, wherein the system is an in-line chromatography column packing system for measuring one or more ultrasound parameters to determine one or more characteristics of a slurry suspension comprising a plurality of particles dispersed in a liquid carrier and wherein the signal processing device is adapted to determine one or more of the ultrasound parameters of the slurry suspension.

4. The system of claim 3, further comprising an in-line sensor for determining a substantially contemporaneous temperature of the suspension, and wherein at least one of the ultrasound parameters is measured in part using the temperature of the suspension and a calibration parameter derived from the calibrating device.

5. The system of claim 3, wherein at least one of the ultrasound parameters is ultrasound velocity.

6. The system of claim 3, wherein at least one of the slurry suspension characteristics is concentration measurement of the particles in the suspension based at least in part on the ultrasound velocity.

7. The system of claim 3, wherein one or more of the ultrasound parameters is selected from a group consisting of: velocity, attenuation and reflection coefficient.

8. The system of claim 3, wherein the ultrasound wave generator/receiver device (52) generates pulsed ultrasound waves.

9. The system of claim 8, wherein the signal processing device (56) uses one or more time difference measurements, at least one of which is zero crossing, to determine one or more of the ultrasound parameters of the slurry suspension.

10. The system of claim 9, wherein at least one of the ultrasound parameters determined is ultrasound velocity.

**Patentansprüche**

1. System zum Messen eines oder mehrerer Ultraschallparameter einer Suspension, welche Partikel umfasst, die in einer Trägerflüssigkeit dispergiert sind, Folgendes umfassend,
zwei oder mehr eintauchbare Vorrichtungen (10, 54) zum Messen von einem oder mehreren Ultraschallparametern einer Suspension, welche Partikel umfasst, die in einer Trägerflüssigkeit dispergiert sind, umfassend eine oder mehrere Ultraschallsonden (14, 76), angepasst, um Ultraschallwellen zu übermitteln und zu empfangen, mit einer Oberfläche, einem oder zwei Reflektoren (18, 78), mit wenigstens zwei reflektiven Oberflächen (20, 72, 74), die in abgestuften Abständen von der Sondenoberfläche angeordnet sind, um die Ultraschallwellen auf die Sondenoberfläche zu reflektieren, und ein Gehäuse (12, 80), das die Sonde und den Reflektor in Positionen mit einem Raum zwischen der Sondenoberfläche und der reflektiven Oberfläche fixiert, umfassend eine Öffnung (26, 82, 84) in das Gehäuse (12, 80), die ausreichend groß ist, um es der Suspension zu erlauben, in den Raum zwischen der Sondenoberfläche und der reflektiven Oberfläche zu strömen,
eine Ultraschallwellengenerator- / -empfängervorrichtung (52), in Kommunikation mit den eintauchbaren Vorrichtungen (10, 54), um die Ultraschallwellen an die eintauchbaren Vorrichtungen (10, 54) zu übermitteln und von diesen zu empfangen; und
eine Signalverarbeitungsvorrichtung (56) in Kommunikation mit dem Ultraschallwellengenerator (52), um Ultraschallwellen von der Ultraschallwellengenerator- / -empfängervorrichtung zu empfangen und zu verarbeiten, **dadurch gekennzeichnet, dass**
wenigstens eine der eintauchbaren Vorrichtungen (10, 54) angepasst ist, um die Trägerflüssigkeit zu kalibrieren, indem sie ferner einen Filter umfasst, der angepasst ist, um zu verhindern, dass die Partikel in den Raum strömen, während es der Trägerflüssigkeit ermöglicht wird, in den Raum der eintauchbaren Kalibriervorrichtung (10, 54) zu strömen, wobei Temperaturaufzeichnung und Kompensierung eingesetzt werden, um Temperaturschwankungen bei den Suspensionsmessungen zu verringern.

2. System nach Anspruch 1, ferner umfassend eine Suspensionsverarbeitungseinheit zum Verarbeiten der Suspension, umfassend eine oder mehrere Befestigungen zum Stützen der einen oder der mehreren Vorrichtungen in der Verarbeitungseinheit, sodass die Suspension in den Raum zwischen der Sondenoberfläche und der reflektierenden Oberfläche strömen kann.

3. System nach Anspruch 1 oder 2, wobei das System ein Durchflusschromatographie-Säulenpackungssystem zum Messen eines oder mehrerer Ultraschallparameter zum Bestimmen von einem oder mehreren Merkmalen einer Aufschlämmungssuspension ist, umfassend eine Vielzahl von Partikeln, die in einer Trägerflüssigkeit dispergiert sind, und wobei die Signalverarbeitungsvorrichtung angepasst ist, einen oder mehrere der Ultraschallparameter der Aufschlämmungssuspension zu bestimmen.

4. System nach Anspruch 3, ferner umfassend einen Durchflusssensor zum Bestimmen einer im Wesentlichen zeitgleichen Temperatur der Suspension, und wobei wenigstens einer der Ultraschallparameter teilweise auf der Grundlage der Temperatur der Suspension gemessen wird und ein Kalibrierungsparameter aus der Kalibrierungsvorrichtung abgeleitet wird.

5. System nach Anspruch 3, wobei wenigstens einer der Ultraschallparameter Ultraschallgeschwindigkeit ist.

6. System nach Anspruch 3, wobei wenigstens eines der Aufschlämmungsmerkmale die Konzentrationsmessung der Partikel in der Suspension ist, wenigstens zum Teil auf der Grundlage der Ultraschallgeschwindigkeit.

7. System nach Anspruch 3, wobei ein oder mehrere Ultraschallparameter aus einer Gruppe ausgewählt sind, bestehend aus: Geschwindigkeit, Dämpfung und Reflektionskoeffizient.

8. System nach Anspruch 3, wobei die Ultraschallwellengenerator- / - empfängervorrichtung (52) gepulste Ultraschallwellen generiert.

9. System nach Anspruch 8, wobei die Signalverarbeitungsvorrichtung (56) eine oder mehrere Zeitunterschiedsmessungen einsetzt, von denen wenigstens eine ein Nulldurchgang ist, um einen oder mehrere der Ultraschallparameter der Aufschlämmungssuspension zu bestimmen.

10. System nach Anspruch 9, wobei wenigstens einer der bestimmten Ultraschallparameter Ultraschallgeschwindigkeit ist.

**Revendications**

1. Système de mesure d'un ou plusieurs paramètres ultrasoniques d'une suspension comprenant des particules dispersées dans un véhicule liquide, comprenant :

deux dispositifs submersibles ou plus (10, 54) pour mesurer un ou plusieurs paramètres ultrasoniques d'une suspension comprenant des particules dispersées dans un véhicule liquide, comprenant une ou plusieurs sondes ultrasoniques (14, 76) qui sont à même de transmettre et de recevoir des ondes ultrasoniques et ayant une surface, un ou plusieurs réflecteurs (18, 78) ayant au moins deux surfaces réfléchissantes (20, 72, 74) positionnés à des distances échelonnées de la surface de la sonde pour réfléchir les ondes ultrasoniques sur la surface de la sonde et un boîtier (12, 80), qui fixe la sonde et le réflecteur dans des positions séparées par un espace entre la surface de la sonde et la surface réfléchissante, comprenant une ouverture (26, 82, 84) dans le boîtier (12, 80) qui a une taille suffisante pour permettre à la suspension de s'écouler dans l'espace compris entre la surface de la sonde et la surface réfléchissante,
un dispositif générateur/récepteur d'ondes ultrasoniques (52) en communication avec les dispositifs submersibles (10, 54) pour transmettre les ondes ultrasoniques aux dispositifs submersibles (10, 54) et en recevoir les ondes ultrasoniques ; et
un dispositif de traitement de signal (56) en communication avec le générateur d'ondes ultrasoniques (52) pour recevoir et traiter les ondes ultrasoniques provenant du dispositif générateur/récepteur d'ondes ultrasoniques, **caractérisé en ce que** :
au moins l'un des dispositifs submersibles (10, 54) est à même d'étalonner le véhicule liquide en incorporant en outre un filtre qui est à même d'empêcher les particules de s'écouler dans l'espace tout en permettant au véhicule liquide de s'écouler dans l'espace du dispositif submersible d'étalonnage (10, 54), dans lequel on utilise un enregistrement et une compensation de température pour réduire la variation de température lors de mesures de la suspension.

2. Système selon la revendication 1, comprenant en outre une unité de traitement de suspension pour traiter la suspension, comprenant un ou plusieurs appareils pour supporter un ou plusieurs des dispositifs à l'intérieur de l'unité de traitement de manière que la suspension puisse s'écouler dans l'espace compris entre la surface de la sonde et la surface réfléchissante.

3. Système selon la revendication 1 ou la revendication 2, dans lequel le système est un système de garniture de colonne chromatographique en ligne pour mesurer un ou plusieurs paramètres ultrasoniques afin de déterminer une ou plusieurs caractéristiques d'une suspension comprenant une pluralité de particules dispersées dans un véhicule liquide et dans lequel le dispositif de traitement de signal est à même de déterminer un ou plusieurs des paramètres ultrasoniques de la suspension.

4. Système selon la revendication 3, comprenant en outre un capteur en ligne pour déterminer une température sensiblement simultanée de la suspension et dans lequel au moins l'un des paramètres ultrasoniques est mesuré en partie en utilisant la température de la suspension et un paramètre d'étalonnage tiré du dispositif d'étalonnage.

5. Système selon la revendication 3, dans lequel au moins l'un des paramètres ultrasoniques est la vitesse ultrasonique.

6. Système selon la revendication 3, dans lequel au moins l'une des caractéristiques de la suspension est la mesure de la concentration des particules dans la suspension sur la base d'au moins en partie la vitesse ultrasonique.

7. Système selon la revendication 3, dans lequel un ou plusieurs des paramètres ultrasoniques est ou sont choisis dans un groupe constitué de la vitesse, du coefficient d'atténuation et du coefficient de réflexion.

8. Système selon la revendication 3, dans lequel le dispositif générateur/récepteur d'ondes ultrasoniques (52) génère des ondes ultrasoniques pulsées.

9. Système selon la revendication 8, dans lequel le dispositif de traitement de signal (56) utilise une ou plusieurs mesures de différence dans le temps, dont au moins l'une est le passage par zéro, pour déterminer un ou plusieurs des paramètres ultrasoniques de la suspension.

10. Système selon la revendication 9, dans lequel au moins l'un des paramètres ultrasoniques déterminés est la vitesse ultrasonique.

FIG. 1

EP 2 223 096 B1

50

54

suspension

UT pulser-receiver

UT probe

UT waves

Reflector surface

Oscilloscope

Signal processing

FIG. 2

52

58

56

FIG. 3a

82, 84

72

78

0.5 inch

45°

**FIG. 3b**

FIG. 4

FIG. 5

FIG. 6

EP 2 223 096 B1

FIG. 7a

FIG. 7b

FIG. 8

FIG. 9

FIG. 10

FIG. 11

EP 2 223 096 B1

120

124

122

UT probe

UT pulser-receiver

Signal processing

% read out

Control box

FIG. 12

Computer 168

Oscilloscope 166

142

Flow back to tank or another container

160

148

150

144

Pulser/receiver

164

158

146

Stirrer

Slurry

152

154

140

144

FIG. 13

EP 2 223 096 B1

180

195

182

194

190

186

184

192

193

suspension

188

Data acquisition, signal processing, and display

Pulser/receiver

Cable or wireless communication

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007280712 A

- US 5533402 A